# EUROPEAN PATENT APPLICATION

(11) **EP 1 225 329 A1**
(43) Date of publication of application: **24.07.2002**
(21) Application number: 02250371.8
(22) Date of filing: 19.01.2002
(51) Int. Cl.: F02N 15/06, H02K 7/116

(54) **Pinion assembly**

(30) Priority: 22.01.2001 US 765360
(71) Applicant: JOHNSON ELECTRIC S.A., 2300 La Chaux-de-Fonds (CH)
(72) Inventor: Gomez, Benito, Johnson Electric Engineering Ltd., Tai Po Industrial Estate, Hong Kong (CN); Rodriguez, E., Johnson Electric Engineering Ltd., Tai Po Industrial Estate, Hong Kong (CN)
(74) Representative: Higgins, Michael Roger

(57) **Abstract**

A drive pinion assembly 10 for a starter motor has a drive plate 12 adapted to be driven by a shaft of the motor. The drive plate has axially extending projections 22 which co-operate with corresponding projections 34 on a pinion 14, The projections are separated circumferentially by fingers 36 of a resiliently compressible member 16 to reduce impact loading on the pinion 14 as it engages teeth of a ring gear.

## Description

### Background of the Invention

### Field

This invention relates to electric starter motors and in particular, to the pinion assembly of the starter motor.

### Prior Art

A starter motor is an electric motor which is used to turn an internal combustion engine to start it. The starter motor has a pinion arranged to engage a ring gear fitted to the engine and fitted to its drive shaft in such a way that when the starter motor is turned off, the pinion is disengaged from the ring gear. When the starter motor is turned on, the pinion moves along the shaft and engages the ring gear to turn the engine. The pinion may be moved by a solenoid or by helical splines on the shaft effected by inertia.

In either arrangement, when the pinion strikes the ring gear, there is considerable impact. This impact causes wear on the ring gear and on the pinion eventually leading to the failure of the starter motor. Hence, there is a need to reduce the impact loading on the pinion so as to increase the life expectancy of the starter motor.

### Summary of the Invention

The present invention reduces the impact loading on the pinion by providing a cushioning between the pinion and the drive plate.

Accordingly, the present invention provides a cushioned pinion for use with a starter motor, the pinion comprising:
a first part adapted for being driven in connection with a drive shaft of the starter motor,
a second part having gear teeth adapted to engage a ring gear of an internal combustion engine, and
a third part comprising energy absorbing material disposed between the first and second parts,
wherein the first and second parts have axially extending projections which are circumferentially offset and engage the energy absorbing material therebetween so as to allow only slight relative motion therebetween about a common axis.

Preferably, at least one of the first and second parts has a radially inner barrier for containing radially inward movement of the third part during compression.

Preferably, at least one of the first and second parts has a radially outer barrier for containing radially outward movement of the third part during compression.

Preferably, the third part is a disc with cutouts receiving the projections of the first and second parts.

Alternatively, the third part is an annular ring with radially extending fingers located between and separating the projections of the first part and the projections of the second part.

Preferably, the third part substantially fills the gaps between the projections of the first and second parts.

Preferably, the energy absorbing material is rubber.

The present invention also provides a starter motor for an internal combustion engine comprising: an electric motor having a housing supporting a stator, an output shaft, a wound rotor fitted to the shaft and located to interact with the stator, a pinion assembly mounted on the shaft, engagement means for moving the pinion assembly along the shaft between an engaged position where in use, the pinion assembly engages a ring gear of the engine and a disengaged position, wherein the pinion assembly has a first part coupled to the shaft to be driven thereby a second part having pinion teeth for engaging the ring gear and a third part of compressible material disposed between the first and second parts, wherein the first and second parts have axially extending projections which are axially aligned and circumferentially spaced whereby the second part is driven by the first part through the third part.

### Brief Description of the Drawings

Two preferred examples of a cushioned pinion drive will now be described by way of example only, in which:
Figure 1 is a side view of a pinion drive according to a first embodiment;
Figure 2 is an exploded view of the pinion of Figure 1; and
Figure 3 is an exploded view of a pinion according to a second embodiment.

### Detailed Description of the Preferred Embodiment

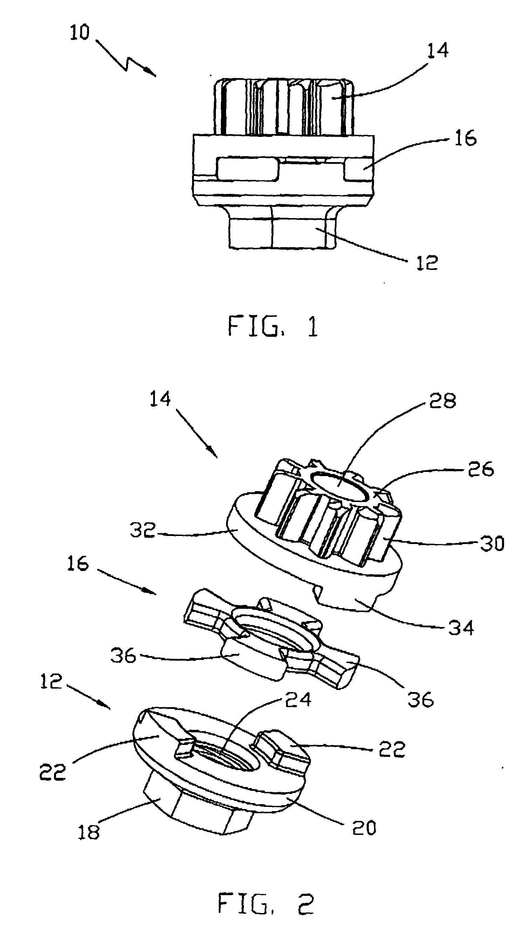

Starter motors are well known and will not be described in detail here for the sake of brevity. The pinion drive shown in Figures 1 and 2 is designed for use with a clutchless inertia drive type starter motor in which the pinion drive is adapted to directly engage helical splines on the starter motor shaft and is moved along the shaft against the force of a return spring due to inertia when the starter motor is turned on.

The drive pinion 10 shown in Figures 1 and 2 comprises three parts, a first part being the drive plate 12, a second part being the pinion 14 and a third part being the energy absorbing member 16.

The drive plate 12 has three main sections, a collar 18, a flange 20 formed at one end of the collar and projections 22 extending axially from a face of the flange remote from the collar. In the embodiment of Figure 1 and 2, the drive plate 12 has only two projections 22. The collar 18 has a central bore 24 with an inner surface arranged to engage a helical spline of the motor shaft.

The pinion 14 is of a similar construction to the drive plate 12. It has a collar 26 with a central opening 28. The inner surface of the collar 26 is adapted to slide along the shaft and does not engage the splines on the shaft. The radially outer surface of the collar 26 has a plurality of gear teeth 30 adapted to engage gear teeth of a ring gear or flywheel of the engine. A flange 32 is formed at one end of the collar 26 and projections 34 extend axially from a face of the flange 32 remote from the collar 26. In this example, there are two projections 34.

The energy absorbing member 16 is a rubber block or disc in the form of an annular ring with four equally spaced radially extending fingers 36. The thickness of the rubber disc is greater than the length of the projections 22, 34 on the drive plate 12 and the pinion 14. The fingers 36 are interposed between and separate the projections 22, 34. Thus, the rubber disc allows cushioned or restrained relative rotational movement between the drive plate 12 and pinion 14. It also allows the two parts to be pressed axially together.

In use, the pinion drive assembly is mounted on the shaft of the starter motor and held together by a return spring, the drive plate being engaged with helical splines on the shaft. When the starter motor is turned on, the shaft rotates but due to the inertia of the drive pinion assembly 10, the assembly does not initially rotate with the shaft but is moved axially along the shaft by the helical splines. The pinion drive assembly 10, by this axial movement engages the teeth of the ring gear causing the splines to push the pinion drive assembly 10 axially to the fully engaged position where the motor now has to rotate the pinion with the shaft, causing the engine to rotate for starting.

As can be expected, there is considerable force applied axially and rotationally to the drive plate 12 and these forces are transmitted to the pinion 14 by the rubber member 16. The axial force results in the rubber member 16 being squashed axially allowing some absorption of the axial force applied to the pinion 14 to reduce the impact loading on the pinion and ring gear. Torque is transmitted from the drive plate 12 to the pinion 14 by squeezing the fingers 36 of the rubber member 16 between the projections 22 on the drive plate 12 and the projections 34 on the pinion 14. This compression of the fingers 36 reduces the impact force between the teeth 30 of the pinion 14 and the teeth of the ring gear. The compression also allows a slight rotation between the drive plate 12 and the pinion 14 allowing for better engagement before full torque is applied between the pinion and the ring gear.

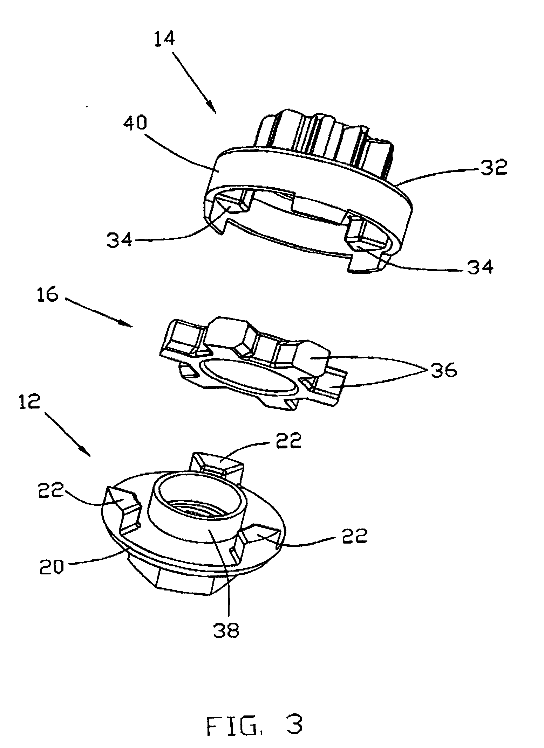

Figure 3 illustrates a second embodiment shown in exploded form. This embodiment has three projections 22 on the drive plate flange 20 and three projections 34 on the pinion flange 32 and the energy absorbing member 16 has six fingers 36. The drive plate flange 20 also has an inner tubular extension forming an inner skirt 38 and the pinion flange 32 has an outer tubular projection forming an outer skirt 40. The two skirts 38, 40 form compression barriers for limiting the deformation of the energy absorbing member 16. The outer skirt 40 also provides a degree of sealing preventing contaminants from entering the space between the drive plate 12 and the pinion 14.

Although a simple starter motor has been used as the basis for this example, the pinion device could be used with more complicated designs including positive engagement, inertia assisted positive engagement arrangements and with models incorporating an overrunning clutch assembly. When used with a clutch assembly, the first part is connected to the splines of the motor shaft via the clutch assembly.

## Claims

1. A pinion assembly for use with a starter motor comprising:
a first part 12 adapted for being driven by a drive shaft of the starter motor, and
a second part 14 having gear teeth 30 adapted to engage a ring gear of an internal combustion engine,
**characterised by** a third part 16 comprising energy absorbing material disposed between the first part 12 and the second part 14,
wherein the first part 12 and the second part 14 have axially extending projections 22, 34 which axially overlap but circumferentially spaced so as to engage the energy absorbing material 16 therebetween so as to allow only slight relative motion between the first part 12 and the second part 14 about a common axis.

2. A pinion assembly according to claim 1 wherein, one of the first part 12 and the second part 14 has a radially inner barrier 38 for containing radially inward movement of the third part 16 during compression.

3. A pinion assembly according to claim 1 or 2 wherein, one of the first part 12 and the second part 14 has a radially outer barrier 40 for containing radially outward movement of the third part 16 during compression.

4. A pinion assembly according to claim 1 wherein, the first and second parts 12, 14 have radially inner and outer barriers 38, 40 for restricting radial movement of the third part 16 during compression.

5. A pinion assembly of claim 4 wherein, the barriers 38, 40 are axially extending skirts forming a compartment for containing the third part 16.

6. The pinion assembly according to any one of the preceding claims wherein, the third part 16 is a block of elastomeric material with cut-outs for receiving the projections 22, 34.

7. A pinion assembly according to any one of claims 1 to 5 wherein, the third part 16 comprises a ring with radially extending fingers 36, the fingers 36 being located between adjacent projections 22, 34 of the first and second parts 12, 14.

8. A starter motor for an internal combustion engine comprising:
an electric motor having a housing supporting a stator,
an output shaft,
a wound rotor fitted to the shaft and located to interact with the stator,
a pinion assembly mounted on the shaft,
engagement means for moving the pinion assembly along the shaft between an engaged position where in use, the pinion assembly engages a ring gear of the engine and a disengaged position,
wherein the pinion assembly has a first part 12 coupled to the shaft to be driven thereby, a second part 14 having pinion teeth 30 for engaging the ring gear
**characterised in that** a third part 16 of compressible material 16 disposed between the first and second parts 12, 14 and the first and second parts 12, 14 have axially extending projections 22, 34 which are axially aligned and circumferentially spaced whereby the second part 14 is driven by the first part 12 through the third part 16.

9. A starter motor according to claim 8 wherein, the projections 22, 34 of the first and second parts 12, 14 have a common radius.

10. A starter motor according to claim 8 or 9 wherein, the third part 16 is a ring of elastomeric material having radially extending fingers 36 which separate adjacent projections 22, 34 of the first and second parts 12, 14.

11. A starter motor according to claim 8, 9 or 10 wherein, the pinion assembly has radially inner and outer barriers 38, 40 for restricting radial movement of the third part 16 when the third part 16 is being compressed by the first and second parts 12, 14.

12. A starter motor according to claim 11 wherein, the inner and outer barriers 38, 40 are axially extending skirts.

13. A starter motor according to claim 12 wherein, the axially extending skirts 38, 40 form a compartment containing the third part 16.

14. A starter motor according to any one of claims 8 to 13 wherein, the shaft has a spline and the first part 12 has an inner bore surface arranged to engage the spline for driving the pinion assembly.

15. A starter motor according to claim 14 wherein, the spline on the shaft is a helical spline and the helical spline causes the first part 12 to axially compress the third part 16 against the second part 14 during operation of the starter motor.
